(19) Europäisches Patentamt
European Patent Office
Office européen des brevets

(11) Veröffentlichungsnummer: **0 105 171**
**B1**

(12) # EUROPÄISCHE PATENTSCHRIFT

(45) Veröffentlichungstag der Patentschrift: **06.08.86**

(51) Int. Cl.[4]: **C 08 B 15/05**, C 08 B 11/20

(21) Anmeldenummer: **83108260.7**

(22) Anmeldetag: **22.08.83**

(54) **Verfahren zur Herstellung von Celluloseethern mit verbessertem Dispergierverhalten.**

(30) Priorität: **01.09.82 DE 3232467**

(43) Veröffentlichungstag der Anmeldung: **11.04.84 Patentblatt 84/15**

(45) Bekanntmachung des Hinweises auf die Patenterteilung: **06.08.86 Patentblatt 86/32**

(84) Benannte Vertragsstaaten: **AT BE CH DE FR GB IT LI NL SE**

(56) Entgegenhaltungen:
**FR - A - 2 354 374**
**US - A - 3 432 488**

**CHEMICAL ABSTRACTS, Band 78, Nr. 24, 18 Juni 1973, Seite 67, Nr. 149142r, Columbus Ohio (USA);**

(73) Patentinhaber: **HOECHST AKTIENGESELLSCHAFT,** ***Postfach 80 03 20, D-6230 Frankfurt am Main 80 (DE)***

(72) Erfinder: **Felcht, Utz-Hellmuth, Dr.Dipl.-Chem., Hubertusstrasse 2, D-6232Bad Soden-Neuenhain (DE)**
Erfinder: **Berenbold, Helmut, Dr.Dipl.-Chem., Neroberg 12, D-6200 Wiesbaden (DE)**

**EP 0 105 171 B1**

Anmerkung: Innerhalb von neun Monaten nach der Bekanntmachung des Hinweises auf die Erteilung des europäischen Patents im Europäischen Patentblatt kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

ACTORUM AG

**Beschreibung**

Die Erfindung betrifft ein Verfahren zur Herstellung von in wässrigen Medien dispergierbaren Celluloseethern durch Umsetzung von wasserlöslichen Celluloseethern mit einem Modifizierungsmittel.

Wasserlösliche Celluloseether wie Natrium-carboxymethylcellulose (NaCMC), Methyl-hydroxyethylcellulose (MHEC), Methyl-hydroxypropylcellulose (MHPC, Ethyl-hydroxyethylcellulose (EHEC), Hydroxyethylcellulose (HEC oder Hydroxypropylcellulose (HPC) haben in der Praxis als viskositätserzeugende Produkte (z. B. als Verdickungsmittel, Klebemittel, Bindemittel oder Dispergierhilfsmittel) grosse Verbreitung gefunden. Oftmals müssen sie jedoch in Wasser oder in wässrige Systeme eingebracht werden, wodurch Probleme auftreten können, sie klumpenfrei aufzulösen oder zu dispergieren und damit eine schnelle und gleichmässige Auflösung bis zum endgültigen Viskositätsaufbau zu erreichen. Im Stand der Technik sind bereits verschiedene Massnahmen beschrieben worden, die im Prinzip darauf hinauslaufen, das Anquellen der Oberfläche der Celluloseetherpartikel (Pulver, Granulate, Agglomerate) durch die Einwirkung von Wassermolekülen zumindest so lange zu verhindern oder hinauszuzögern, bis die Partikel gleichmässig im Wasser enthaltenden Medium verteilt sind.

Es ist beispielsweise bekannt, Celluloseether mit Dialdehyden wie Glyoxal bereits während des Herstellungsprozesses oder nach Abschluss der Herstellung zu behandeln, um eine reversible Vernetzung der Celluloseethermoleküle zu bewirken [siehe beispielsweise US-PS 2879268, DE-AS 1273810 (= US-PS 3297583), DE-OS 1518213 oder DE-AS 2415556 (= US-PS 3997508)]. Nachteilig an diesem Vernetzungstyp ist jedoch, dass er nur bei Anwendung der vernetzten Celluloseether in solchen wässrigen Medien wirksam ist, d. h. ein klumpenfreies Einbringen ermöglicht, deren pH-Wert vom Neutralpunkt nur mässig abweicht. Damit können aber die derart vernetzten Celluloseether auf Anwendungsgebieten, in denen die pH-Werte der wässrigen Medien im starksauren oder stark-basischen Bereich liegen, nur sehr bedingt eingesetzt werden. Insbesondere im stärker basischen Bereich wird nämlich die Vernetzung, die im allgemeinen als Halbacetal-Bindung vorliegt, durch den Einfluss starker Basen sehr schnell aufgehoben, so dass als Folge dieser reversiblen Aufhebung der Vernetzung beim Einarbeiten der vernetzten Celluloseether Klumpenbildung durch zu schnelle Wechselwirkung der Teilchenoberfläche mit den Wassermolekülen eintritt.

Eine reversible Vernetzung kann auch durch die Umsetzung von Celluloseethern mit $Al^{3+}$-Ionen erzielt werden [siehe beispielsweise DE-OS 1668854 (= GB-PS 1224390) oder EP-OS 0038107], wobei diese Vernetzungsart naturgemäss auf Celluloseether mit anionischen Gruppen wie NaCMC beschränkt ist.

In der DE-PS 2556754 (= US-PS 4097667) werden Celluloseether, die Hydroxyalkylgruppen aufweisen, mit Chlorameisensäureestern umgesetzt, wobei etwa 0,2 bis 0,6 Mol pro Mol des Celluloseethers zum Einsatz kommen. Derartig modifizierte Hydroxyalkylcellulosen können in Lösung gebracht werden, indem man das wässrige Medium nach ihrem Einbringen (als Dispersion) auf einen pH-Wert von mindestens 12 bringt. Die Umsetzung selbst muss auch in Gegenwart einer Base vorgenommen werden. Damit ist aber das Verfahren für die Behandlung von bereits hergestellten Celluloseethern weniger geeignet, da doch eine verhältnismässig grosse Menge des Modifizierungsmittels eingesetzt werden muss. Ausserdem ist die Anwendung von pH-Werten von 12 und mehr für bestimmte wässrige Systeme nicht unproblematisch.

Mit Borsäure oder Boraten modifizierte Celluloseether sollen in wässrigen Medien eines pH-Werts von mehr als 10 eingearbeitet werden können, ohne dass es zu einem Verklumpen des Celluloseethers kommt. Nach der DE-OS 2535311 (= GB-PS 1465934) können gegebenenfalls auch bereits mit Glyoxal vernetzte Celluloseether mit Borationen behandelt werden, wobei die Modifizierung in einer Aufschlämmung aus dem Celluloseether in einem organischen Lösemittel wie Aceton durchgeführt wird; die maximal zugegebene Menge an Borationen liegt bei 5 Gew.-%. Für die praktische Anwendung ist dieses Verfahren jedoch nicht sehr günstig, da es grössere Mengen an organischem Lösemittel erfordert, die auch wieder aus der Aufschlämmung entfernt werden müssen. Ausserdem sind diese modifizierten Celluloseether bei pH-Werten unterhalb von 10 nicht oder nicht in so gutem Masse dispergierbar wie dies bei pH-Werten von mehr als 10 der Fall ist. Auch in den EP-OSen 0041364 und 0055820 werden Borationen zur Modifizierung der Löslichkeitseigenschaften von NaCMC oder HEC eingesetzt, jedoch bereits während der Alkalicellulose-Herstellung, aber ohne Hinweis auf eine mögliche bessere Dispergierbarkeit bei bestimmten pH-Werten.

Cellulose und Cellulosederivate wie Celluloseether sind auch bereits mit anorganischen oder organischen Siliciumverbindungen umgesetzt worden:

– nach der DE-PS 842044 (= US-PS 2532622) werden Celluloseester oder -ether eines DS von 1 bis 2,75 mit Triaryl- oder Diaryl-monoalkyl-silylhalogeniden in Anwesenheit eines Halogenwasserstoff-Fängers wie Pyridin oder Ammoniak zur Reaktion gebracht; die erhaltenen Produkte tragen die organischen Silylgruppen als Ethersubstituenten, sie sollen thermisch stabiler, hydrophober und zur Herstellung von Folien geeignet sein; ein in seinen Substitutionsgraden untersuchter Cellulosemischether auf der Basis von MC hatte einen $DS_M$ von 1,7 und einen $DS_{Si}$ von 1,3;

– nach der US-PS 2562955 wird Cellulose oder werden Celluloseester oder -ether mit Mono-, Di- oder Trialkyl-silylchloriden oder -silylacetaten in Anwesenheit eines Säurefängers wie Pyridin zur

Reaktion gebracht; die erhaltenen Produkte tragen die organischen Silylgruppen als Ethersubstituenten, sie sollen in den üblichen Lösemitteln und Lösemittelgemischen der Celluloseetherchemie unlöslich sein; der einzige konkret beschriebene Cellulosemischether auf der Basis von MC hatte einen $DS_M$ von 1,8 und einen $DS_{Si}$ von 0,24, die Produkte sollen hydrophober und in organischen Lösemitteln unlöslich sein;

– nach der DE-OS 1668129 (= US-PS 3418312) werden Celluloseether mit Trimethylsilylgruppen eines DS von 2 bis 3 hergestellt, indem man Trimethyl-silylchlorid, ein Mono- oder Disaccharid, ein organisches Lösemittel, ein tertiäres Amin und Cellulose miteinander zur Reaktion bringt; die erhaltenen Produkte sollen in organischen Lösemitteln wie Chloroform oder Benzol löslich sein;

– nach der DE-AS 2521496 (= US-PS 3961976) werden Alkalicellulose, Natrium-metasilikat und Natrium-monochloracetat in Gegenwart von $H_2O_2$ und $Fe^{2+}$-Ionen miteinander zur Reaktion gebracht, wobei eine siliciummodifizierte NaCMC ungeklärter chemischer Konstitution entsteht, die leichter in Wasser löslich sein soll;

– nach der DE-OS 2725764 (= US-PS 4106948) wird eine wässrige Zusammensetzung für Oberflächenbeschichtungen mit verbesserter Wasserfestigkeit aus Wasser, HEC und einer organischen Siliciumverbindung der allgemeinen Formel $R^1Si(OR^2)_3$ hergestellt, wobei $R^1$ eine Methyl-, Ethyl- oder Vinylgruppe und $R^2$ eine Methyl-, Ethyl- oder Methoxyethylgruppe bedeuten, insbesondere ist diese Siliciumverbindung das Methyltrimethoxysilan; der Anteil der organischen Siliciumverbindung im Gemisch beträgt etwa 1 bis 30 Gew.-Teile pro Gew.-Teil HEC, bei einem pH-Wert von 3 bis 5,5 sind die Zusammensetzungen klare Lösungen, und

– nach den DE-OSen 3104530 (= GB-A 2070613) und 3104531 (= GB-A 2070612) werden Trimethylsilylcellulosen entweder in einem organischen Lösemittel unter Anwesenheit von $Na_2CO_3$ oder in flüssigem Ammoniak hergestellt, wobei im allgemeinen Substitutionsgrade von 1,3 bis 2,7 erhalten werden; die Produkte sind in Wasser unlöslich, können aber in bestimmten Lösemitteln wie Kohlenwasserstoffen oder Ethern löslich sein.

Die bekannten Verfahren weisen jedoch noch gewisse Nachteile auf, die im wesentlichen darauf beruhen, dass die umgesetzte Menge an Silanen sehr hoch ist, weshalb die entstehenden Cellulosemischether im allgemeinen auch nach längerer Behandlung bei unterschiedlichsten pH-Werten nicht oder nicht vollständig löslich werden. Ausserdem sind die Verfahrensbedingungen der Umsetzung in wasserfreien organischen Lösemitteln wie Pyridin oder Toluol oder in flüssigem Ammoniak für die Praxis der grosstechnischen Celluloseether-Herstellung ungeeignet, da sie für die Erzeugung von Massenprodukten viel zu aufwendig sind. Darüber hinaus führen Reaktionen der Silane mit nur einer gegenüber Celluloseether reaktionsfähigen Gruppe (wie Trimethylsilylchlorid) zwar zur Mischetherbildung über eine monofunktionelle Substitution an den OH-Gruppen, aber eine bi- oder trifunktionelle Substitution zwischen Molekülen (d. h. eine Vernetzung kann mit diesem Silantyp noch nicht erreicht werden.

Aufgabe der vorliegenden Erfindung ist es deshalb, ein Verfahren zur Herstellung von solchen modifizierten Celluloseethern vorzuschlagen, die sich in wässrige Medien eines breiten pH-Wert-Bereichs (von stark-sauer bis stark-alkalisch) klumpenfrei einarbeiten lassen, die es ermöglichen, ihren Viskositätsaufbau während und nach der dispergierenden Einarbeitungsphase durch technisch einfache Mittel gezielt zu steuern und zu kontrollieren, und die durch geringe Mengen an zuzusetzendem Modifizierungsmittel bereits in eine reversible Modifizierungsart überführt werden können. Ausserdem sollte das vorzuschlagende Verfahren in den bekannten Aggregaten und Verfahrensstufen der Celluloseetherherstellung ohne grösseren apparativen und verfahrenstechnischen Aufwand integriert werden können.

Die Lösung dieser Aufgabe geht aus von einem Verfahren zur Herstellung von in wässrigen Medien dispergierbaren Celluloseethern durch Umsetzung von wasserlöslichen Celluloseethern mit einem Modifizierungsmittel. Das erfindungsgemässe Verfahren ist dann dadurch gekennzeichnet, dass als Modifizierungsmittel Silane der allgemeinen Formel

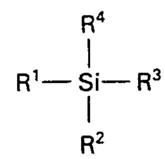

in der $R^1$ einen Alkyl-, Alkenyl- oder gegebenenfalls substituierten Arylrest, $R^2/R^3$ Wasserstoff oder einen Alkyl-, Alkenyl-, gegebenenfalls substituierten Aryl-, gegebenenfalls substituierten Alkoxy-, gegebenenfalls substituierten Aryloxy-, Acyloxy-, O-Silyl- oder N-Silylrest, wobei die Reste gleich oder verschieden sein können, und $R^4$ einen gegebenenfalls substituierten Alkoxy-, gegebenenfalls substituierten Aryloxy-, Acyloxy-, O-Silyl- oder N-Silylrest bedeuten, in einer Menge von 0,0001 bis 0,12 Mol, bezogen auf 1 Mol Cellulose, eingesetzt werden.

Wenn in den aufgeführten Resten ein Alkyl- oder Alkenylrest auftritt, so soll er 1 bis 4 C-Atome enthalten, ein Arylrest enthält insbesondere bis zu 15 C-Atome. Unter 1 Mol Cellulose ist die Molekularmasse einer Anhydroglucose-Einheit in g zu verstehen. Unter dem Begriff «substituierten» ist bei einem Arylrest insbesondere ein Chlor-, Brom-, Alkoxy-, Aryloxy- oder Phenylsubstituent und bei einem Alkoxy- oder Aryloxyrest insbesondere ein Alkoxy- oder Aryloxysubstituent zu verstehen.

In bevorzugten Ausführungsformen des erfindungsgemässen Verfahrens bedeuten in der allgemeinen Formel für das Silan $R^1$ einen Alkylrest und $R^3 = R^4$ einen gegebenenfalls substituierten Alkoxy- oder Alkanoyloxyrest, insbesondere bedeuten in der allgemeinen Formel für das Silan $R^1$ einen Alkylrest ($C_1$ oder $C_2$) und $R^2 = R^3 = R^4$ einen

Alkanoyloxyrest ($C_1$ oder C2) substituierten Alkoxyrest ($C_1$ oder $C_2$). Die Silane werden bevorzugt in einer Menge von 0,0005 bis 0,10 Mol, bezogen auf 1 Mol Cellulose, eingesetzt. Beispiele für geeignete Silane sind:

Ethyl-triacetoxysilan
($R^1 = C_2H_5$, $R^2 = R^3 = R^4 = O\text{-}CO\text{-}CH_3$)
Methyl-tri(2-methoxy-ethoxy-)silan
($R_1 = CH_3$, $R^2 = R^3 = R^4 = O\text{-}C_2H_4\text{-}O\text{-}CH_3$)
Methyl-trimethoxysilan
($R_1 = CH_3$, $R^2 = R^3 = R^4 = O\text{-}CH_3$)
Methyl-triethoxysilan
($R_1 = CH_3$, $R^2 = R^3 = R^4 = O\text{-}C_2H_5$)
Hexamethyl-disilazan
[$R^1 = R^2 = R^3 = CH_3$, $R^4 = NH\text{-}Si(CH_3)_3$]

Es können auch verschiedene Siloxan-Typen eingesetzt werden, beispielsweise ein Typ, bei dem $R^1 = CH_3$, $R^2 = R^3 = O\text{-}C_2H_5$ und $R^4 = [O\text{-}Si(CH_3)(O\text{-}C_2H_5)]_n\text{-}O\text{-}C_2H_5$ oder ein anderer, bei dem $R^1 = R^2 = R^3 = CH_3$ und $R^4 = [O\text{-}SiH(CH_3)]_m\text{-}[O\text{-}Si(CH_3)_2]_e\text{-}Si(CH_3)_3$ bedeuten. Von den Silanen werden bevorzugt die eingesetzt, die nicht nur eine, sondern mindestens zwei Abgangsgruppen in den Substituenten $R^2$ bis $R^4$ aufweisen, da diese echte Vernetzungsreaktionen eingehen können; dies ist u. a. deshalb von Vorteil, weil so bereits sehr geringe Mengen an Silanen zur wirksamen Modifizierung ausreichen. Die Silane sind im allgemeinen farblose bis leicht gelbliche Flüssigkeiten, die in den üblichen organischen Lösemitteln löslich sind; teilweise sind sie auch in Wasser löslich, es kann dort aber auch häufig eine Hydrolyse stattfinden; die polymeren Typen können auch bereits eine mehr oder weniger starke Viskosität zeigen. Silane mit unterschiedlichsten Substitutionsgraden sind literaturbekannt und im Handel zu erwerben.

In der Praxis der Herstellung von Celluloseethern wird das erfindungsgemässe Verfahren so eingesetzt, dass die bereits getrockneten oder noch feuchten Celluloseether in einem herkömmlichen Mischaggregat (z. B. einem Rührkessel, Kneter oder Schnellmischer) mit dem Silan, bevorzugt in Gegenwart eines organischen, wasserlöslichen Lösemittels wie Isopropanol oder Aceton und in Gegenwart von Wasser umgesetzt werden. Die Anwesenheit von Wasser und/oder einem organischen Lösemittel ist jedoch nicht zwingend erforderlich. Als wasserlösliche Celluloseether kommen beispielsweise die eingangs aufgeführten Typen in Betracht, insbesondere sind dies Hydroxyalkylcellulosen oder Alkyl-hydroxyalkylcellulosen, in denen der Alkylrest $C_1$ oder $C_2$ und der Hydroxyalkylrest $C_2$ bis $C_4$ bedeuten; bevorzugt wird als wasserlöslicher Celluloseether eine Hydroxyethylcellulose eingesetzt. Die Temperaturen können während der modifizierenden Umsetzung des Celluloseethers mit dem Silan im Bereich von −30 °C und +130 °C, insbesondere 30 bis 120 °C variiert werden, die Reaktionszeiten liegen zweckmässig bei 10 bis 180 min. Beispielsweise wird das Verfahren so durchgeführt, dass der zu modifizierende, noch vom Herstellungsverfahren her lösemittelfeuchte Celluloseether mit dem in einem organischen Lösemittel gelösten Silan durch Verwirbeln, Vermischen oder durch Zutropfen umgesetzt wird, wonach sich noch eine Trocknungsphase anschliesst. Wenn das Silan beispielsweise als Rest $R^4$ (oder auch $R^2$ und/oder $R^3$) einen Alkanoyloxyrest trägt, so kann es im allgemeinen ohne weiteres mit dem Celluloseether umgesetzt werden, bei Silanen mit einem Alkoxyrest hingegen ist oftmals ein Zusatz einer Säure (beispielsweise Essigsäure) zu empfehlen.

Die nach dem erfindungsgemässen Verfahren hergestellten Produkte und das Verfahren selbst weisen folgende Vorteile auf:

– Die modifizierten Celluloseether können in weiten pH-Wert-Bereichen klumpenfrei in wässrige Medien eingearbeitet werden, beispielsweise auch bei pH-Werten von 1 oder von 13.

– Die Anquell- bzw. Auflöseverzögerung der modifizierten Celluloseether kann über die Silanmenge, die Verfahrensbedingungen und den Silantyp gesteuert werden.

– Der Zeitpunkt des Beginns der Viskositätsentwicklung kann bei einigen der modifizierten Celluloseether gezielt gesteuert werden. Beispielsweise können diese bei neutralem pH-Wert des wässrigen Systems klumpenfrei einarbeitbar sein und auch unlöslich bleiben, beginnen aber nach Anwendung einer einfachen verfahrenstechnischen Massnahme wie einer Temperaturerhöhung oder einer pH-Wert-Änderung sich aufzulösen und die Viskosität zu entwickeln. Dies kann insbesondere für solche Anwendungsgebiete von Vorteil sein, bei denen zur guten Vermischbarkeit von vielen Komponenten eines Systems (z. B. bei der Herstellung von Dispersionen wie einer Dispersionsfarbe) zwar ein gutes Dispergierverhalten, aber zunächst keine starke Viskosität erwünscht ist.

– Die einzusetzende Menge an Silanen liegt bei weniger als 0,12 Mol pro Mol Cellulose, d. h. die erzielbaren Vorteile können durch geringe Mengen an Silanen bewirkt werden.

– Das Verfahren kann diskontinuierlich durchgeführt werden, aber es ist auch ein Einsatz als Teilstufe in einem der modernen kontinuierlichen Verfahren möglich.

In den nachfolgenden Beispielen beziehen sich die %-Angaben auf das Gewicht, Gew.-Teile verhalten sich zu Vol.-Teilen wie g zu $cm^3$. Die Messung der Anlöse- und Endlösezeiten erfolgte in einem automatisch-arbeitenden Viskographen in Wasser eines verschiedenen pH-Werts, wobei unter Anlösezeit ein Wert in min nach Beginn der Messung zu verstehen ist, bei dem 5% der Gesamtviskosität erreicht sind, und unter Endlösezeit ein Wert in min, bei dem die maximale Viskosität erreicht ist. Unter MS ist der molare Substitutionsgrad zu verstehen, d. h. die umgesetzte molare Menge an Veretherungsmittel (z. B. Ethylenoxid) pro Mol Cellulose, er kann auch grösser als 3 sein (der maximale Wert für den DS).

Beispiel 1

Es werden 3,150 Gew.-Teile einer an Isopropanol und Wasser feuchten Hydroxyethylcellulose

(Viskosität von etwa 70000 mPa·s nach Höppler bei 20 °C in 1,9%iger wässriger Lösung, MS von 2,5) eines Feststoffgehalts von 20% bei Zimmertemperatur in einem Knetaggregat mit einer frisch hergestellten Lösung von 6,3 Gew.-Teilen Ethyltriacetoxysilan (= 0,012 Mol Silan pro Mol Cellulose) in 200 Vol.-Teilen eines 100%igen Isopropanols versetzt. Nach einer Durchmischungszeit von 30 min wird das Reaktionsgemisch ausgetragen und in einem Wirbelschichttrockner bei 80 °C während 50 min getrocknet. Abschliessend wird die getrocknete modifizierte HEC in einer Mühle zerkleinert und auf eine Teilchengrösse von weniger als 160 *m abgesiebt. Das erhaltene Feinpulver lässt sich in neutrales Wasser klumpenfrei als Dispersion einrühren, löst sich aber bei diesem pH-Wert nicht mehr auf. Die Abhängigkeit des Viskositätsverhaltens von einer pH-Wert-Änderung kann der nachfolgenden Tabelle I entnommen werden. Wie auch die Anlösezeiten zeigen, lässt sich das Produkt sowohl im Sauren als auch im Alkalischen dispergierend einrühren.

Tabelle I

| Lösezeit | pH-Wert des wässrigen Mediums | | | | |
|---|---|---|---|---|---|
| | 1 | 2 | 7 | 12 | 13 |
| Anlösezeit | 1,8 | 10,0 | unlöslich | 3,8 | 2,8 |
| Endlösezeit | 9,0 | 36,0 | unlöslich | 17,0 | 10,0 |

Vergleichsbeispiel V1

Es wird nach den Angaben des Beispiels 1 vorgegangen, aber ohne eine Modifizierung mit dem Silan. Das getrocknete und gemahlene unmodifizierte Produkt klumpt beim Einrühren in ein saures, neutrales oder alkalisches wässriges Medium; ein dispergierendes Einrühren ist nicht möglich, die vollständige Auflösung dauert mehrere Stunden.

Vergleichsbeispiel V2

Es wird eine handelsübliche, mit Glyoxal reversibel vernetzte HEC mit einer Anlösezeit von etwa 30 min in neutralem Wasser in ein wässriges Medium mit einem alkalischen pH-Wert eingerührt, wobei sich sofort Klumpen bilden. Die vollständige Auflösung dauert mehrere Stunden, ein dispergierendes Einrühren ist in alkalischem Medium nicht möglich.

Beispiel 2

Es wird nach den Angaben des Beispiels 1 vorgegangen, aber mit einer Lösung von 0,63 Gew.-Teilen Ethyl-triacetoxysilan (= 0,0012 Mol Silan pro Mol Cellulose) in 50 Vol.-Teilen Isopropanol, die Trocknungszeit beträgt 60 min. Die Abhängigkeit des Viskositätsverhaltens von einer pH-Wert-Änderung kann der nachfolgenden Tabelle II entnommen werden.

Tabelle II

| Lösezeit | pH-Wert des wässrigen Mediums | | | | |
|---|---|---|---|---|---|
| | 2 | 7 | 10 | 11 | 12 |
| Anlösezeit | 11,5 | unlöslich | 16,0 | 3,2 | 2,0 |
| Endlösezeit | 20,0 | unlöslich | 32,0 | 13,0 | 7,0 |

Das in Wasser unlösliche Produkt löst sich durch Einstellung des pH-Werts auf 11 bis 12 innerhalb weniger min, lässt sich aber dennoch – wie auch die Anlösezeit zeigt – bei diesem pH-Wert dispergierend einrühren.

Beispiel 3

Es wird nach den Angaben des Beispiels 1 vorgegangen, aber mit 300 Gew.-Teilen einer HEC eines Feststoffgehalts von 30% und einer Lösung von 0,1 Gew.-Teilen Methyl-tri(2-methoxy-ethoxy)silan (= 0,0011 Mol Silan pro Mol Cellulose) und 1 Gew.-Teil Eisessig in 50 Vol.-Teilen des Isopropanols. Die Abhängigkeit des Viskositätsverhaltens von einer pH-Wert-Änderung kann der nachfolgenden Tabelle III entnommen werden.

Tabelle III

| Lösezeit | pH-Wert des wässrigen Mediums | | | | |
|---|---|---|---|---|---|
| | 2 | 7 | 10 | 11 | 12 |
| Anlösezeit | 2,5 | unlöslich | 5,5 | 1,5 | 1,0 |
| Endlösezeit | 7,0 | unlöslich | 17,0 | 11,0 | 7,0 |

Beispiel 4

Es wird nach den Angaben des Beispiels 3 vorgegangen, aber mit einer Lösung von 0,05 Gew.-Teilen Ethyl-triacetoxysilan (= 0,00065 Mol Silan pro Mol Cellulose) in 50 Vol.-Teilen des Isopropanols. Das erhaltene Produkt zeigt in neutralem Wasser eine Anlösezeit von 10 und eine Endlösezeit von 60 min.

Beispiel 5

Es wird nach den Angaben des Beispiels 1 vorgegangen, aber mit 100 Gew.-Teilen einer trockenen HEC (Viskosität von 50000 mPa·s, MS von 2,5) und mit einer Lösung von 0,1 Gew.-Teilen Methyl-tri(2-methoxy-ethoxy-)silan (= 0,001 Mol Silan pro Mol Cellulose), 1 Gew.-Teil Eisessig und 50 Vol.-Teilen des Isopropanols. Das erhaltene Produkt zeigt in neutralem Wasser eine Anlösezeit von 20 und eine Endlösezeit von 93 min.

Beispiel 6

Es wird nach den Angaben des Beispiels 3 vorgegangen, aber mit einer Lösung von 0,1 Gew.-Teilen Methyl-trimethoxysilan (= 0,0022 Mol Silan pro Mol Cellulose), 1 Gew.-Teil Eisessig und 50 Vol.-Teilen des Isopropanols. Das erhaltene Produkt zeigt in neutralem Wasser eine Anlösezeit von 17 und eine Endlösezeit von 85 min.

Beispiel 7

Es wird nach den Angaben des Beispiels 3 vorgegangen, aber mit einer Lösung von 0,1 Gew.-Teilen Methyl-triethoxysilan (= 0,0017 Mol Silan pro Mol Cellulose) in 50 Vol.-Teilen des Isopropanols. Das erhaltene Produkt zeigt in neutralem Wasser eine Anlösezeit von 1,5 und eine Endlösezeit von 10 min.

Beispiel 8

Es wird nach den Angaben des Beispiels 1 vorgegangen, aber mit 100 g einer trockenen MHEC (Viskosität von 15000 mPa·s, $DS_M$ von 1,6 und $MS_{HE}$ von 0,2) und einer Lösung von 10 Gew.-Teilen Ethyl-triacetoxysilan (= 0,082 Mol Silan pro Mol Cellulose) in 50 Vol.-Teilen des Isopropanols; die Trocknung erfolgt bei 120 °C in einem Trockenschrank während 120 min. Das erhaltene Produkt löst sich in neutralem Wasser nicht auf und kann bis zu einem pH-Wert von 11,5 klumpenfrei in ein wässriges Medium dispergierend eingearbeitet werden.

**Patentansprüche**

1. Verfahren zur Herstellung von in wässrigen Medien dispergierbaren Celluloseethern durch Umsetzung von wasserlöslichen Celluloseethern mit einem Modifizierungsmittel, dadurch gekennzeichnet, dass als Modifizierungsmittel Silane der allgemeinen Formel

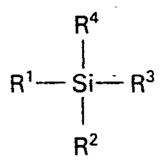

in der $R^1$ einen Alkyl (von $C_1$ bis $C_4$)-, Alkenyl (von $C_1$ bis $C_4$)- oder gegebenenfalls substituierten Arylrest, $R^2/R^3$ Wasserstoff oder einen Alkyl-, Alkenyl-, gegebenenfalls substituierten Aryl-, gegebenenfalls substituierten Alkoxy-, gegebenenfalls substituierten Aryloxy-, Acyloxy-, O-Silyl- oder N-Silylrest, wobei die Reste gleich oder verschieden sein können, und $R^4$ einen gegebenenfalls substituierten Alkoxy-, gegebenenfalls substituierten Aryloxy-, Acyloxy-, O-Silyl- oder N-Silylrest bedeuten, in einer Menge von 0,0001 bis 0,12 Mol, bezogen auf 1 Mol Cellulose, eingesetzt werden.

2. Verfahren nach Anspruch 1, dadurch gekennzeichnet, dass in der allgemeinen Formel $R^1$ einen Alkylrest und $R^3/R^4$ gleich sind und einen gegebenenfalls substituierten Alkoxy- oder Alkanoyloxyrest bedeuten.

3. Verfahren nach Anspruch 1 oder 2, dadurch gekennzeichnet, dass in der allgemeinen Formel $R^1$ einen Alkylrest und $R^2/R^3/R^4$ gleich sind und einen Alkanoyloxyrest oder einen gegebenenfalls mit einer Alkoxygruppe substituierten Alkoxyrest bedeuten, wobei alle Alkylgruppen 1 oder 2 C-Atome aufweisen.

4. Verfahren nach einem der Ansprüche 1 bis 3, dadurch gekennzeichnet, dass die Silane in einer Menge von 0,0005 bis 0,10 Mol eingesetzt werden

5. Verfahren nach einem der Ansprüche 1 bis 4, dadurch gekennzeichnet, dass das Silan in Anwesenheit eines wasserlöslichen organischen Lösemittels und Wasser mit dem Celluloseether umgesetzt wird.

6. Verfahren nach einem der Ansprüche 1 bis 5, dadurch gekennzeichnet, dass als wasserlöslicher Celluloseether eine Hydroxyalkylcellulose oder eine Alkylhydroxyalkylcellulose eingesetzt werden, in denen der Alkylrest $C_1$ oder $C_2$ und der Hydroxyalkylrest $C_2$ bis $C_4$ enthalten sind.

7. Verfahren nach einem der Ansprüche 1 bis 6, dadurch gekennzeichnet, dass als wasserlöslicher Celluloseether eine Hydroxyethylcellulose eingesetzt wird.

**Claims**

1. Process for the preparation of cellulose ethers which can be dispersed in aqueous media, by reacting water-soluble cellulose ethers with a modifying agent, characterised in that the modifying agents used are silanes of the general formula

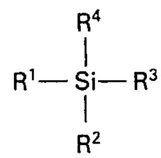

wherein $R^1$ denotes an alkyl radical ($C_1$ to $C_4$), alkenyl radical ($C_1$ to $C_4$) or optionally substituted arly radical, $R^2/R^3$ denote hydrogen or an alkyl radical, alkenyl radical, optionally substituted aryl radical, optionally substituted alkoxy radical, optionally substituted aryloxy radical, acyloxy radical, O-silyl radical or N-silyl radical and are identical or different, and $R^4$ denotes an optionally substituted alkoxy radical, optionally substituted aryloxy radical, acyloxy radical, O-silyl radical or N-silyl radical, the amount of modifying agent varying between 0.0001 and 0.12 mole per mole of cellulose.

2. Process as claimed in claim 1, wherein, in the general formula, $R^1$ denotes an alkyl radical ana $R^3/R^4$ are identical and denote an optionally substituted alkoxy or alkanoyloxy radical.

3. Process as claimed in claim 1 or 2, wherein, in the general formula, $R^1$ denotes an alkyl radical and $R^2/R^3/R^4$ are identical and denote an alkanoyloxy radical or an alkoxy radical optionally substituted with an alkoxy group, all alkyl groups having 1 or 2 carbon atoms.

4. Process as claimed in any of claims 1 to 3, wherein the silanes are used in quantities between 0.0005 and 0.1 mole.

5. Process as claimed in any of claims 1 to 4, wherein the silane is reacted with the cellulose ether in the presence of a water-soluble organic solvent and water.

6. Process as claimed in any of claims 1 to 5, wherein the water-soluble cellulose ether employed is a hydroxyalkylcellulose or an alkyl-hydroxyalkylcellulose, in which the alkyl radical contains 1

or 2 carbon atoms and the hydroxy-alkyl radical contains 2 to 4 carbon atoms.

7. Process as claimed in any of claims 1 to 6, wherein the water-soluble cellulose ether used is a hydroxyethylcellulose.

**Revendications**

1. Procédé pour la préparation d'éthers de cellulose dispersables dans des milieux aqueux, par réaction d'éthers de cellulose solubles dans l'eau avec un agent de modification, caractérisé en ce que, comme agent de modification, on utilise des silanes de formule générale:

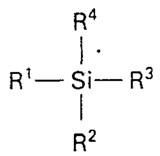

dans laquelle $R^1$ représente un groupe alcoyle en $C_1$ à $C_4$, alcényle en $C_1$ à $C_4$ ou un groupe aryle éventuellement substitué, $R^2/R^3$ représentent l'hydrogène ou un groupe alcoyle, alcényle, aryle éventuellement substitué, alcoxy éventuellement substitué, aryloxy éventuellement substitué, acyloxy, O-silyle ou N-silyle, les groupes pouvant être identiques ou différents, et $R^4$ représente un groupe alcoxy éventuellement substitué, aryloxy éventuellement substitué, acyloxy, O-silyle ou N-silyle, en une quantité de 0,0001 à 0,12 mole par mole de cellulose.

2. Procédé selon la revendication 1, caractérisé en ce que, dans la formule générale, $R^1$ représente un groupe alcoyle et $R^3/R^4$ sont identiques et représentent un groupe alcoxy éventuellement substitué ou un groupe alcanoyloxy.

3. Procédé selon l'une des revendications 1 et 2, caractérisé en ce que, dans la formule générale, $R^1$ représente un groupe alcoyle et $R^2/R^3/R^4$ sont identiques et représentent un groupe alcanoyloxy ou un groupe alcoxy éventuellement substitué avec un groupe alcoxy, tous les groupes alcoxy ayant 1 ou 2 atomes de carbone.

4. Procédé selon l'une quelconque des revendications 1 à 3, caractérisé en ce que les silanes sont utilisés en une quantité de 0,0005 à 0,10 mole.

5. Procédé selon l'une quelconque des revendications 1 à 4, caractérisé en ce qu'on fait réagir le silane avec l'éther de cellulose en présence d'un solvant organique soluble dans l'eau et d'eau.

6. Procédé selon l'une quelconque des revendications 1 à 5, caractérisé en ce que, comme éther de cellulose soluble dans l'eau, on utilise une hydroxyalcoylcellulose ou une alcoylhydroxyalcoylcellulose, dans lesquelles le groupe alcoyle contient 1 ou 2 atomes de carbone et le groupe hydroxyalcoyle contient de 2 à 4 atomes de carbone.

7. Procédé selon l'une quelconque des revendications 1 à 6, caractérisé en ce que comme éther de cellulose soluble dans l'eau, on utilise une hydroxyéthylcellulose.